# EUROPÄISCHE PATENTSCHRIFT

(11) **EP 3 939 694 B1**
(45) Veröffentlichungstag und Bekanntmachung des Hinweises auf die Patenterteilung: **17.12.2025**
(21) Anmeldenummer: 21173258.1
(22) Anmeldetag: 11.05.2021
(51) Int. Cl.: B01D 71/48, B01D 67/00

(54) **HERSTELLUNGSVERFAHREN FÜR EINE PET-MEMBRAN MITTELS EINES PHASENINVERSIONS-PROZESSES UND EINE NACH DEM VERFAHREN ERHALTENE PET-MEMBRAN**
MANUFACTURING OF A PET MEMBRANE BY PHASE INVERSION AND MEMBRANE THUS OBTAINED
MEMBRANE EN PET ET PRODUCTION D'UNE TELLE MEMBRANE PAR INVERSION DE PHASE

(30) Priorität: 17.07.2020 DE 102020118948
(43) Veröffentlichungstag der Anmeldung: 19.01.2022
(73) Patentinhaber: Leibniz-Institut für Oberflächenmodifizierung e.V., 04318 Leipzig (DE)
(72) Erfinder: Breite, Dr. Daniel, 04315 Leipzig (DE); Schulze, Dr. Agnes, 04463 Großpösna (DE); Krause, Maria, 04889 Belgern-Schildau/ OT Kobershain (DE)
(74) Vertreter: Gulde & Partner

(56) Entgegenhaltungen:
- WO-A1-2020/050617
- CN-A- 106 693 728
- PULIDO BRUNO A. ET AL: "Recycled Poly(ethylene terephthalate) for High Temperature Solvent Resistant Membranes", vol. 1, no. 9, 22 July 2019 (2019-07-22), pages 2379 - 2387, XP055811486, ISSN: 2637-6105, Retrieved from the Internet <URL:https://pubs.acs.org/doi/pdf/10.1021/acsapm.9b00493> [retrieved on 20210708], DOI: 10.1021/acsapm.9b00493

## Beschreibung

Die Erfindung betrifft ein Herstellungsverfahren für eine PET-Membran mittels eines Phaseninversions-Prozesses und eine nach dem Verfahren erhältliche PET-Membran.

### Technologischer Hintergrund

Poröse Flachfiltermembranen werden für eine Vielzahl von Filtrations-Anwendungen eingesetzt und gewinnen zunehmend an industrieller Bedeutung, beispielsweise in den Bereichen der Hämodialyse, der Trinkwasser- und Abwasser-Aufreinigung, der Sterilfiltration oder der Getränkeproduktion. Die Membranen werden aus verschiedenen Polymermaterialien gefertigt, die je nach Anwendungsgebiet verschiedenen Anforderungen genügen müssen. Polyethylenterephthalat (PET) ist eines der Polymere, welches für Filtrationsanwendungen unter besonders harschen Bedingungen geeignet ist, da es auch unter hohen Temperaturen eingesetzt werden kann und in vielen organischen Lösemitteln chemisch beständig ist.

Derzeit werden PET-Membranen vorwiegend in Form sogenannter *"track etched"* Membranen verwendet. Diese werden aus einem dichten PET-Film hergestellt, welcher in einem aufwendigen Verfahren mit schweren Ionen beschossen wird, sodass zylindrische Poren im Polymerfilm entstehen. Diese Poren müssen durch anschließende, nasschemische Ätzverfahren auf die benötigte Porengröße erweitert werden.

Ein wesentlicher Nachteil dieser *"track etched"* Membranen ist die vergleichsweise geringe Permeabilität aufgrund der kleinen Porosität. So erreicht eine kommerzielle *"track echted"* Membran mit einer Porengröße von 50 nm eine Permeabilität von 0,25 mL cm⁻² min⁻¹ bar⁻¹ (bzw. 150 L m⁻² h⁻¹ bar⁻¹).

Alternativ können Membranen mittels eines Phaseninversions-Prozesses hergestellt werden. Der Phaseninversions-Prozess besteht in der Herbeiführung einer Phasentrennung in einer ursprünglich homogenen Polymerlösung durch Temperaturwechsel oder durch Kontaktierung mit einem Nichtlösemittel in flüssiger Phase. In der industriellen Herstellung wird vorwiegend Wasser als Nichtlösemittel verwendet, wobei sich der Begriff Nichtlösemittel auf die schlechte Löslichkeit des Polymers in besagtem Nichtlösemittel bezieht.

Im Herstellungsprozess der Membranen wird die Polymer-haltige Phase (Polymer-Lösung) als definierter Film auf ein Substrat aufgetragen, und schließlich in einem Nichtlösemittel ausgefällt. Dabei führt der Austausch von Lösemittel durch Nichtlösemittel zur Phasentrennung, wodurch die polymerreiche Phase die poröse Matrix der Membran und die polymerarme Phase die Poren bildet. Der dabei entstehende poröse Polymerkörper bildet eine Membran mit hoher Porosität (>50%) und weist eine entsprechend höhere Permeabilität auf. Diese Art der Herstellung steht bisher für PET-Membranen auf konventionellem Weg nicht zur Verfügung, da die Löslichkeit von PET in gängigen Lösemitteln unzureichend ist.

Pulido *et al.* beschreiben die Herstellung einer reinen PET-Membran mittels Phaseninversion in Trifluoressigsäure, Hexafluorisopropanol oder Mischungen dergleichen mit Dichlormethan als Polymer-Lösungsmittel und Wasser, Ethanol, oder Methanol als Nichtlösemittel. Aufgrund der kostenintensiven Lösemittel sowie deren toxischen und korrosiven Eigenschaften, ist die Anwendung dieses Verfahrens für einen großtechnischen Prozess jedoch ungeeignet. (ACS Appl. Polym. Mater. 2019, 1, 9, 2379-2387). Weitere Beispiele finden sich in der Patentliteratur: CN 106 693 728 A und WO 2020/050617 A1.

### Zusammenfassung der Erfindung

Das erfindungsgemäße Verfahren zur Herstellung einer Membran aus Polyethylenterephthalat (PET) nach Anspruch 1 behebt oder mindert zumindest die erwähnten Nachteile des Standes der Technik. Das Verfahren verwendet weniger toxische Lösemittel als im Stand der Technik und die Membraneigenschaften, insbesondere deren Permeabilität, sind verbessert.

Das erfindungsgemäße Verfahren umfasst das Bereitstellen einer PET-haltigen Lösung in einem organischen Lösemittel mit einer Temperatur von 80°C bis 150°C. Hierbei ist das organische Lösemittel aus der Gruppe N-methyl-2-pyrrolidon (NMP), Dimethylformamid (DMF), Dimethylacetamid (DMAC) und deren Kombinationen ausgewählt. Ist die Temperatur der PET-haltigen Lösung unterhalb des beanspruchten Bereichs führt dies zur abrupten thermischen Fällung des PETs und zur Bildung instabiler Membranen. Anschließend wird ein Substrat mit der heißen PET-haltigen Lösung beschichtet. Darauffolgend wird das heiß beschichtete Substrat zügig, d.h. ohne abzukühlen in ein Nichtlösemittel überführt, das zur Fällung der PET-Membran aus der heißen PET-haltigen Beschichtung auf dem Substrat dient. Vorzugsweise erfolgen die Beschichtung des Substrats mit der heißen PET-haltigen Lösung und die Überführung in das Fällbad innerhalb von 1 Minute (≤ 1 Minute). Als Nichtlösemittel wird eine Wasser-Alkohol Mischung verwendet.

Die genannten organischen Lösemittel eignen sich aufgrund ihrer geringen Flüchtigkeit und aufgrund ihrer fehlenden oder allenfalls geringen korrosiven Eigenschaften für den großtechnischen Einsatz des Verfahrens.

Vorzugsweise beinhaltet die PET-haltige Lösung 5 bis 15 Gew.% PET. Auch kann die PET-haltige Lösung 1 bis 10 Gew.% eines Additivs beinhalten. Das Additiv ist vorzugsweise aus der Gruppe Polyethylenglycol, Polyvinylpyrrolidon und deren Kombination ausgewählt. Der Einsatz der Additive, hier Porenbildner, kann die gezielte Einstellung der Porengröße und Porenzahl von Membranen beeinflussen sowie eine homogenere (Größen-)Verteilung der Poren bewirken. Ferner können die Additive eine Molekularmasse von 100 bis 20.000 g/mol aufweisen.

Ist das Nichtlösemittel eine Wasser-Alkohol Mischung, so ist der Alkohol der Mischung Isopropanol. Die Wasser-Alkohol Mischung beinhaltet dabei einen Volumenanteil des Alkohols von 50 Vol.-%., um einen optimalen Phaseninversionsprozess zu bewirken und somit eine homogene Porenbildung zu gewährleisten. Es werden Wasser und Isopropanol im Volumenverhältnis 1:1 verwendet .

Ferner beträgt die Temperatur des Nichtlösemittels im Fällbad 10°C bis 50°C. Ist die Temperatur des Nichtlösemittels unterhalb des beanspruchten Bereichs kann dies zur abrupten thermischen Fällung des PETs und zur Bildung instabiler Membranen führen, bzw. das PET würde dann in Form eines dispergierten Pulvers im Fällbad ausfallen. Ist die Temperatur des Nichtlösemittels oberhalb des beanspruchten Bereichs kann dies zu einem zu schnellen Lösemittel/Nichtlösemittelaustausch (Phaseninversionsprozess) führen und somit ebenfalls eine unkontrollierte Fällung des PETs verursachen.

Das erfindungsgemäße Verfahren kann zudem ein Beschichten des Substrats mit der heißen PET-haltigen Lösung und ein Fällen des PET auf dem Substrat in einem kontinuierlichen Prozess mittels Rolle-zu-Rolle-Fertigung ermöglichen, da die verwendeten Lösemittel Stahl- oder Metallführungselemente oder Wannen der Fertigungsanlage nicht korrodieren. In dieser Ausführungsform ist das Substrat bevorzugt ein Vliesgewebe, welches durch die Rolle-zu-Rolle-Fertigungsanlage geführt werden kann.

Ein weiterer Aspekt der Erfindung betrifft eine Membran aus Polyethylenterephthalat (PET), welche nach dem zuvor beschrieben Verfahren hergestellt wurde.

Weitere bevorzugte Ausführungsformen ergeben sich aus der nachfolgenden Beschreibung.

### Kurzbeschreibung der Figuren

Die Erfindung wird nachfolgend anhand mehrere Ausführungsbeispiele und dazugehöriger Abbildungen näher erläutert.
Fig. 1 zeigt REM-Aufnahmen der Oberfläche einer nach dem erfindungsgemäßen Verfahren hergestellten Membran (25.000-facher Vergrößerung).
Fig. 2 zeigt REM-Aufnahmen des Querschnitts einer nach dem erfindungsgemäßen Verfahren hergestellten Membran (1.010-facher Vergrößerung).

### Detaillierte Beschreibung der Erfindung

Das nachfolgend verwendete PET stammt aus Einweg-PET-Flaschen, ohne Etikett und Verschluss und wurde vor der Verwendung zerkleinert, mit Wasser gewaschen (30°C, 10 min) und bei Raumtemperatur getrocknet.

Als Substrat können Glas- oder Metallplatten verwendet werden, von denen die Membran nach der Fällung wieder gelöst wird. Auch können poröse Trägermaterialien wie Vliesgewebe als Substrat verwendet werden. In diesen Ausführungsformen wird die Membran nach der Fällung nicht vom Substrat gelöst, da die Membran mechanisch mit dem Vlies verbunden ist.

### Ausführungsbeispiel 1

Für die Membranherstellung wurden 100g einer Polymerlösung hergestellt. Es wurden 12 Gew.% PET (12 g), 4 Gew.% PEG-400 (4 g, Acros Organics) und 84 Gew.% NMP (84 g, Sigma Aldrich) in einen 250 mL Rundkolben für 2 h bei 180°C zum Rückfluss erhitzt.

Die so hergestellte Lösung wurde auf 140°C abgekühlt und für die weitere Verwendung bereitgestellt. 10mL der Lösung wurden auf einer Glasplatte (Substrat) mit einem Rakel (Zehntner GmbH, Spalthöhe 200 µm) und einem Aufziehtisch (Bewegung mit 20mm/s, Zehntner GmbH) aufgetragen. Die Glasplatte wurde dann zur Fällung der Membran in ein Fällbad (je 50 Vol.-% Wasser und Isopropanol, 10°C) überführt, wo der Austausch des Lösemittels (NMP) durch das Fällmittel (Wasser + Alkohol) erfolgte. Dieser Prozess führte zur Bildung einer mechanisch stabilen PET-Membran. Die Verarbeitung der heißen PET-haltigen Lösung (140°C) einschließlich Beschichtung der Glasplatte und Überführung ins Fällbad muss zügig erfolgen (max. 1 min), so dass die PET-Lösung nicht erkaltet und das PET ausfällt. Nach Abschluss der Fällung (5 min) kann die Membran aus dem Fällbad entnommen werden. Zur weiteren Verarbeitung wird die Membran gewaschen (3*30min mit Wasser) und getrocknet.

### Ausführungsbeispiel 2

Die Durchführung erfolgt wie in Ausführungsbeispiel 1 beschrieben. Auf der Glaspatte ist jedoch ein Vliesgewebe befestigt, auf welches die heiße PET-haltige Lösung aufgetragen wird.

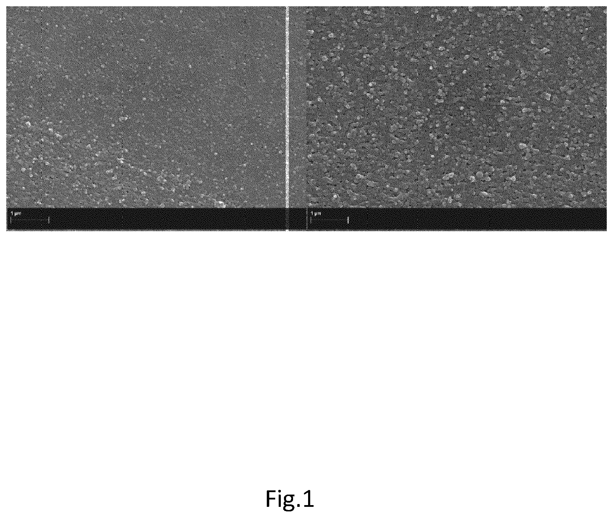

Figur 1 (links) zeigt REM-Aufnahmen der Oberfläche einer nach dem erfindungsgemäßen Verfahren hergestellten Membran in 25.000-facher Vergrößerung. Die gezeigte Membran wurde analog zu Ausführungsbeispiel 1, eine PET-haltige Lösung (12 Gew.% PET, 4 Gew.% PEG-400 und 84 Gew.% NMP) bei 140°C auf ein Substrat aufgetragen und das heiß beschichtete Substrat ohne Abkühlen zügig in ein Fällbad (Wasser/Isopropanol: 1/1; 10°C) überführt. Zum Vergleich zeigt Figur 1 (rechts) die Oberfläche einer Membran, welche aus einer 120°C heißen Beschichtung (11 Gew.% PET, 4 Gew.% PEG-400 und 85 Gew.% NMP) ausgefällt wurde. Die offenporigere Struktur belegt die Abhängigkeit der Porenbildung von der Temperatur der PET-haltigen Lösung.

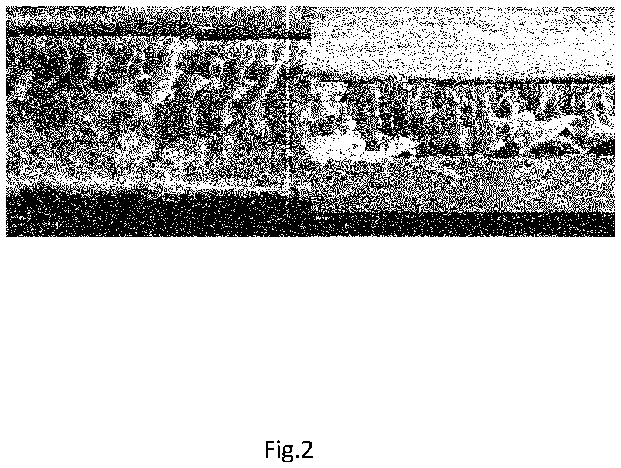

Figur 2 (links) zeigt REM-Aufnahmen eines Querschnitts einer nach dem erfindungsgemäßen Verfahren hergestellten Membran. Es wurde analog zu Ausführungsbeispiel 1, eine PET-haltige Lösung (11 Gew.% PET, 4 Gew.% PEG-10.000 und 85 Gew.% NMP) bei 120°C auf ein Substrat aufgetragen und das heiß beschichtete Substrat ohne Abzukühlen zügig in ein Fällbad (Wasser/Isopropanol: 1/1; 10°C) überführt. Zum Vergleich zeigt Figur 2 (rechts) den Querschnitt einer Membran, welche aus einer 100°C heißen Beschichtung (10 Gew.% PET, 4 Gew.% PEG-400 und 86 Gew.% NMP) ausgefällt wurde. Beide Membranen zeigen eine engporige Deckschicht, getragen von einer Fingerstruktur im Membraninneren, was zu einer erhöhten Stabilität der Membran führt.

Die in Figur 1 und 2 gezeigten Ausführungsformen belegen eine homogenere Verteilung der Poren bzw. Porengrößen durch ein Ausfällen aus heißer Lösung. Hieraus resultiert eine deutlich verbesserte Permeabilität von Wasser (>10.000 L/(bar h m²)) im Vergleich zum Stand der Technik (150 L/(bar h m²)).

## Patentansprüche

1. Ein Verfahren zur Herstellung einer Membran aus Polyethylenterephthalat (PET), wobei das Verfahren die folgenden Schritte umfasst:
- Bereitstellen einer PET-haltigen Lösung in einem organischen Lösemittel mit einer Temperatur von 80°C bis 150°C, wobei das organische Lösemittel aus der Gruppe bestehend aus *N*-methyl-2-pyrrolidon (NMP), Dimethylformamid (DMF), Dimethylacetamid (DMAC) und deren Kombinationen ausgewählt ist;
- Beschichten eines Substrats mit der heißen PET-haltigen Lösung; und
- Überführen des heiß beschichteten Substrats in ein Nichtlösemittel zur Fällung einer PET-Membran aus der heißen PET-haltigen Beschichtung auf dem Substrat,
**dadurch gekennzeichnet, dass** das Nichtlösemittel eine Wasser-Alkohol Mischung ist und eine Temperatur von 10°C bis 50°C aufweist, und
wobei die Wasser-Alkohol Mischung aus Wasser und Isopropanol im Volumenverhältnis 1:1 besteht.

2. Verfahren nach einem der vorhergehenden Ansprüche, wobei die PET-haltige Lösung 5 bis 15 Gew.% PET beinhaltet.

3. Verfahren nach einem der vorhergehenden Ansprüche, wobei die PET-haltige Lösung 1 bis 10 Gew.% eines Additivs beinhaltet und das Additiv aus der Gruppe Polyethylenglycol, Polyvinylpyrrolidon und deren Kombination ausgewählt ist.

4. Verfahren nach einem der vorhergehenden Ansprüche, wobei das Beschichten des Substrats mit der heißen PET-haltigen Lösung und das Fällen des PET auf dem Substrat in einem kontinuierlichen Prozess mittels Rolle-zu-Rolle-Fertigung erfolgt, welche das Substrat durchläuft.

5. Eine Membran aus Polyethylenterephthalat, hergestellt nach dem Verfahren gemäß einem der vorhergehenden Ansprüche.

## Claims

1. A method for producing a membrane made of polyethylene terephthalate (PET), wherein the method comprises the following steps:
- providing a PET-containing solution in an organic solvent having a temperature of 80°C to 150°C, wherein the organic solvent is selected from the group consisting of N-methyl-2-pyrrolidone (NMP), dimethylformamide (DMF), dimethylacetamide (DMAC), and a combination thereof;
- coating a substrate with the hot PET-containing solution; and
- transferring the hot-coated substrate to a non-solvent to precipitate a PET membrane from the hot PET-containing coating on the substrate, **characterized in that** the non-solvent is a water-alcohol mixture and has a temperature of 10°C to 50°C, and
wherein the water-alcohol mixture consists of water and isopropanol at a volume ratio of 1:1.

2. The method according to any one of the preceding claims, wherein the PET-containing solution contains 5 to 15 wt.% PET.

3. The method according to any one of the preceding claims, wherein the PET-containing solution contains 1 to 10 wt.% of an additive, and the additive is selected from the group consisting of polyethylene glycol, polyvinylpyrrolidone, and a combination thereof.

4. The method according to any one of the preceding claims, wherein the coating of the substrate with the hot PET-containing solution and the precipitation of the PET on the substrate are carried out in a continuous roll-to-roll process through which the substrate passes.

5. A membrane made of polyethylene terephthalate, produced by the method according to any one of the preceding claims.

## Revendications

1. Procédé de fabrication d'une membrane en polyéthylène téréphtalate (PET), le procédé comprenant les étapes suivantes :
- préparation d'une solution contenant du PET dans un solvant organique à une température de 80 °C à 150 °C, le solvant organique étant choisi dans le groupe constitué du *N*-méthyl-2-pyrrolidone (NMP), du diméthylformamide (DMF), du diméthylacétamide (DMAC) et de leurs combinaisons ;
- revêtement d'un substrat avec la solution chaude contenant du PET ; et
- transfert du substrat chaudement revêtu dans un non-solvant afin de précipiter une membrane PET à partir du revêtement chaud contenant du PET sur le substrat, **caractérisé en ce que** le non-solvant est un mélange eau-alcool ayant une température de 10 °C à 50 °C, et
**en ce que** le mélange eau-alcool est constitué d'eau et d'isopropanol dans un rapport volumique 1:1.

2. Procédé selon l'une des revendications précédentes, dans lequel la solution contenant du PET comprend de 5 à 15 % en poids de PET.

3. Procédé selon l'une quelconque des revendications précédentes, dans lequel la solution contenant du PET comprend de 1 à 10 % en poids d'un additif, l'additif étant choisi dans le groupe constitué du polyéthylèneglycol, de la polyvinylpyrrolidone et de leurs combinaisons.

4. Procédé selon l'une quelconque des revendications précédentes, dans lequel le revêtement du substrat avec la solution chaude contenant du PET et la précipitation du PET sur le substrat sont réalisés dans un procédé continu de type rouleau-à-rouleau, à travers lequel le substrat est entraîné.

5. Membrane en polyéthylène téréphtalate, fabriquée selon le procédé de l'une quelconque des revendications précédentes.
